# EUROPEAN PATENT SPECIFICATION

(11) **EP 2 139 369 B1**
(45) Date of publication and mention of the grant of the patent: **02.02.2011**
(21) Application number: 08716071.9
(22) Date of filing: 27.02.2008
(51) Int. Cl.: A47J 31/36

(54) **APPARATUS FOR PREPARING AND DISPENSING BEVERAGES FROM A POWDER CONTAINED IN CAPSULES**
VORRICHTUNG ZUR ZUBEREITUNG UND AUSGABE VON GETRÄNKEN AUS EINEM IN KAPSELN ENTHALTENEN PULVER
APPAREIL POUR PRÉPARER ET DISTRIBUER DES BOISSONS À PARTIR D'UNE POUDRE CONTENUE DANS DES CAPSULES

(30) Priority: 22.03.2007 IT MI20070571
(43) Date of publication of application: 06.01.2010
(73) Proprietor: Bianchi Vending Group S.P.A., 24040 Zingonia di Verdellino (BG) (IT)
(72) Inventor: NICOLI, Pierluigi, I-25030 Rudiano (Brescia) (IT)
(74) Representative: Forattini, Amelia
(86) International application number: PCT/EP2008/001536
(87) International publication number: WO 2008/113459

(56) References cited:
- EP-A- 1 046 366
- EP-A- 1 247 481
- EP-A- 1 310 199
- WO-A-2006/003115
- WO-A-2006/029109
- WO-A-2007/045995
- GB-A- 2 205 229

## Description

The present invention relates to an apparatus for preparing and dispensing beverages from a powder contained in capsules.

In the field of vending, automatic machines capable of dispensing beverages starting from differentiated or multi-product pods or capsules are currently not known.

EP-1310199 discloses a machine having a magazine in which the capsules are stacked, and a picker for removing the capsules one at a time from the magazine to transfer them to an extraction system. The picker is able to adopt at least two positions: one in which it receives the capsule from the magazine and a second In which it releases the capsule inside the extraction system as the latter closes round it. Once the capsule has been used, the picker removes it from the lower member of the extraction system before It is replaced by a fresh capsule.

The aim of the present invention is to provide an apparatus which can be applied to automatic machines for dispensing beverages capable of dispensing beverages prepared starting from capsules, pods or single-dose containers in general.

Within this aim, an object of the invention is to provide an apparatus which is capable of using capsules or pods of various types both in terms of shape and in terms of dimensions.

Another object of the invention is to provide an apparatus which is reliable in use and economically operated.

This aim and these and other objects which will become better apparent hereinafter are achieved by an apparatus for preparing and dispensing beverages from a powder contained in capsules, as claimed in the appended claims.

Further characteristics and advantages of the invention will become better apparent from the following detailed description of preferred but not exclusive embodiments thereof, illustrated by way of non-limiting example in the accompanying drawings, wherein:

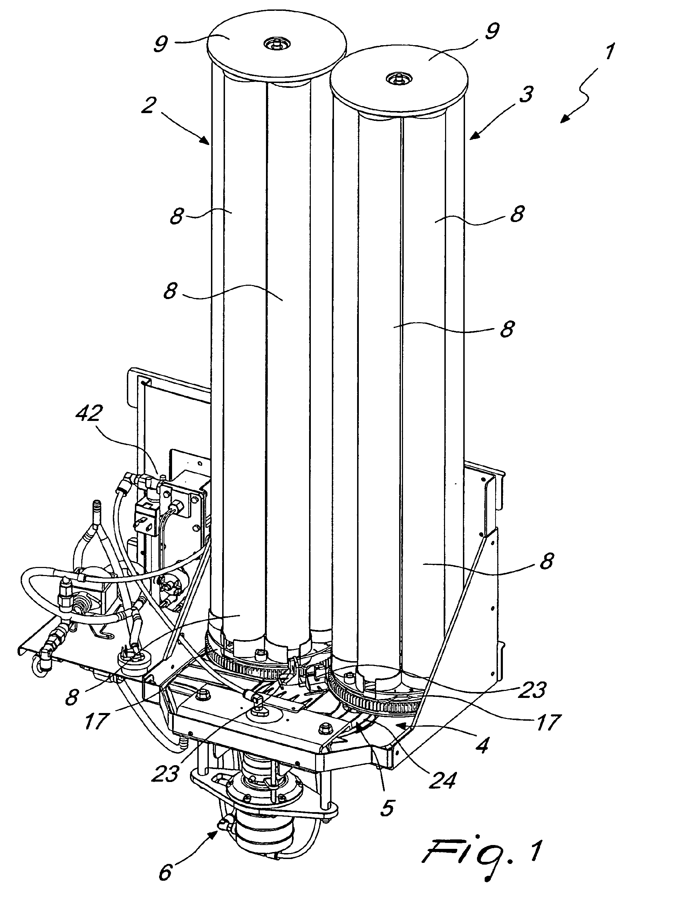

Figure 1 is a perspective view of the apparatus according to the invention;

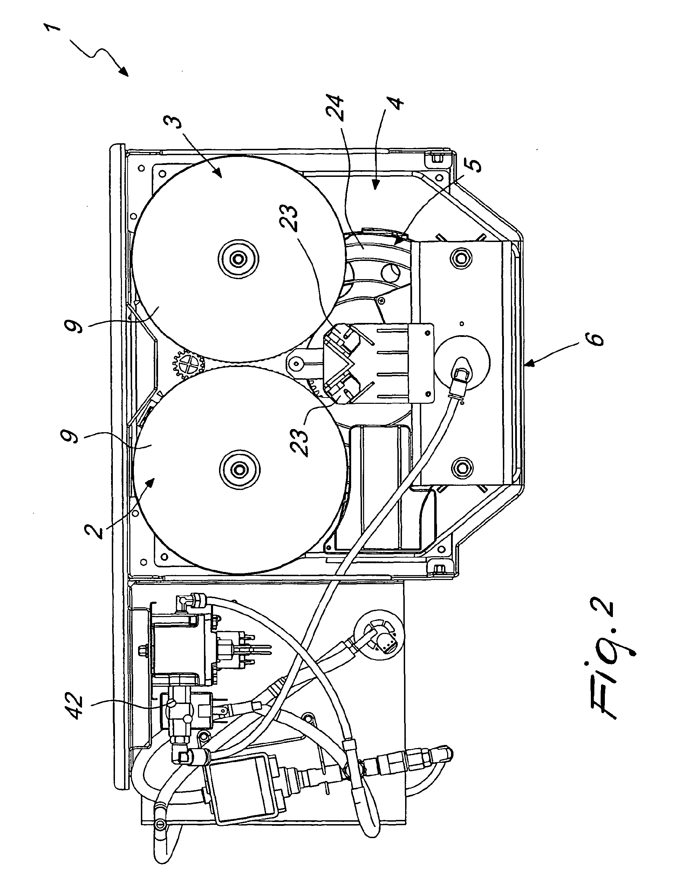

Figure 2 is a plan view of the apparatus of Figure 1;

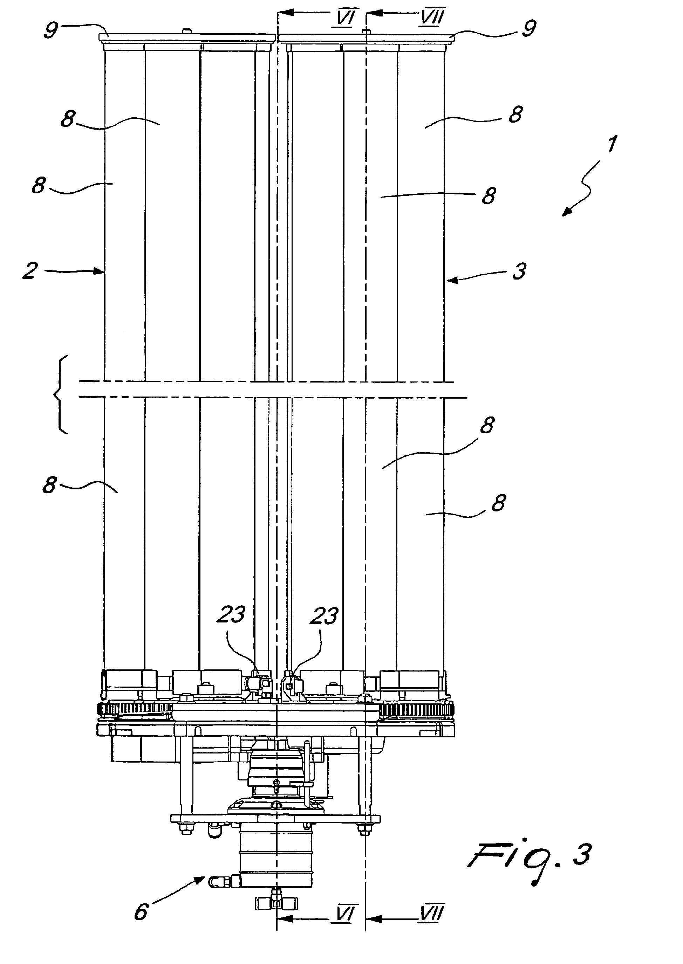

Figure 3 is a front view of the apparatus;
Figure 4 is a sectional front view, in enlarged scale with respect to the preceding figures, of the injection station of the apparatus;
Figure 5 is a view, similar to the preceding one, which illustrates the infusion step;

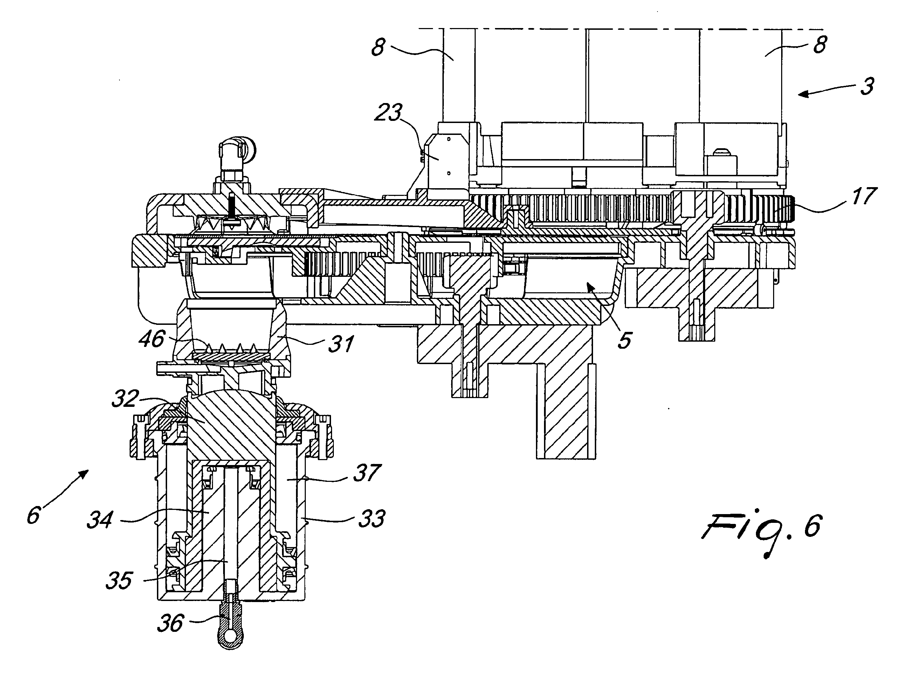

Figure 6 is a sectional side view, taken along the line VI-VI of Figure 3;

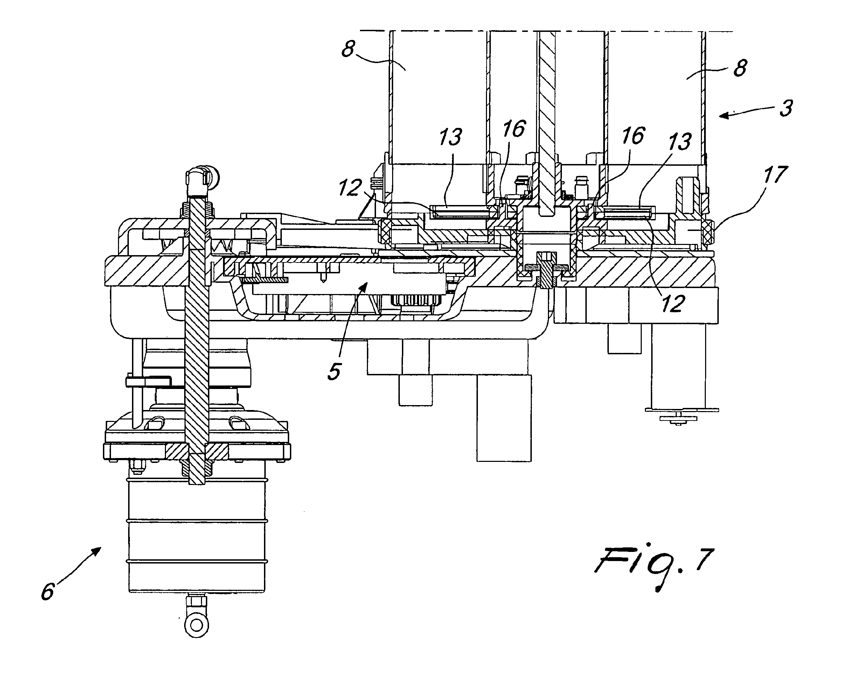

Figure 7 is a sectional side view, taken along the line VII-VII of Figure 3;
Figure 8 is a bottom view of a magazine with the cartridge retention means in the retention position;
Figure 9 is a view, similar to the preceding one, showing the magazine with the retention means in the open position;

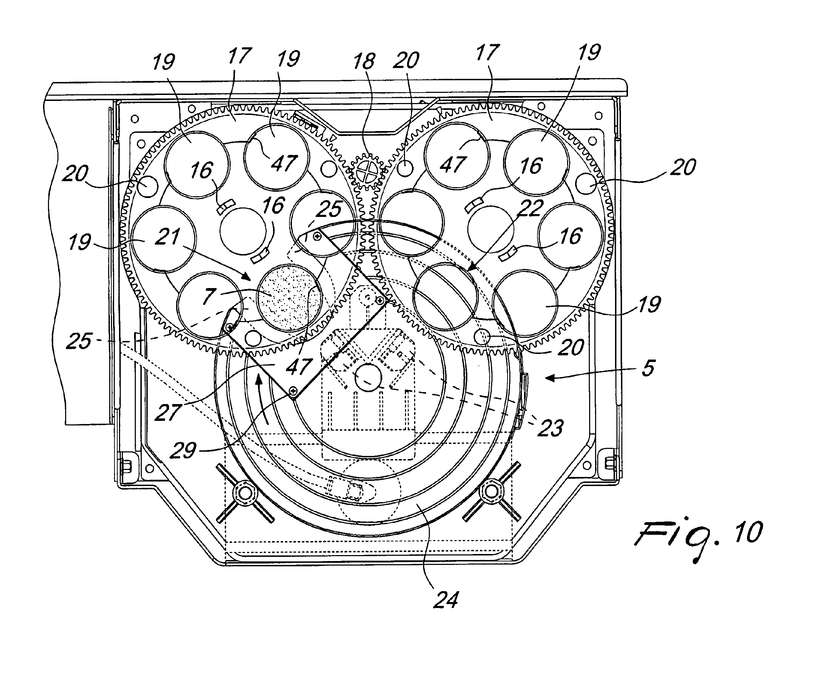

Figure 10 is a partial plan view of the apparatus, illustrating the step for removing a cartridge from the magazine;

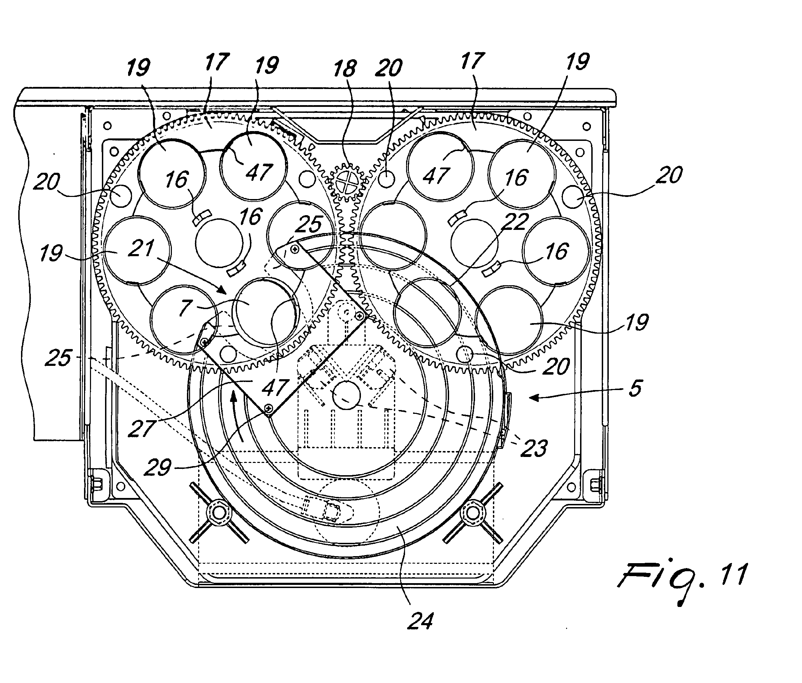

Figure 11 is a view, similar to the preceding one, which shows a subsequent step for the fall of the cartridge into the feeder;

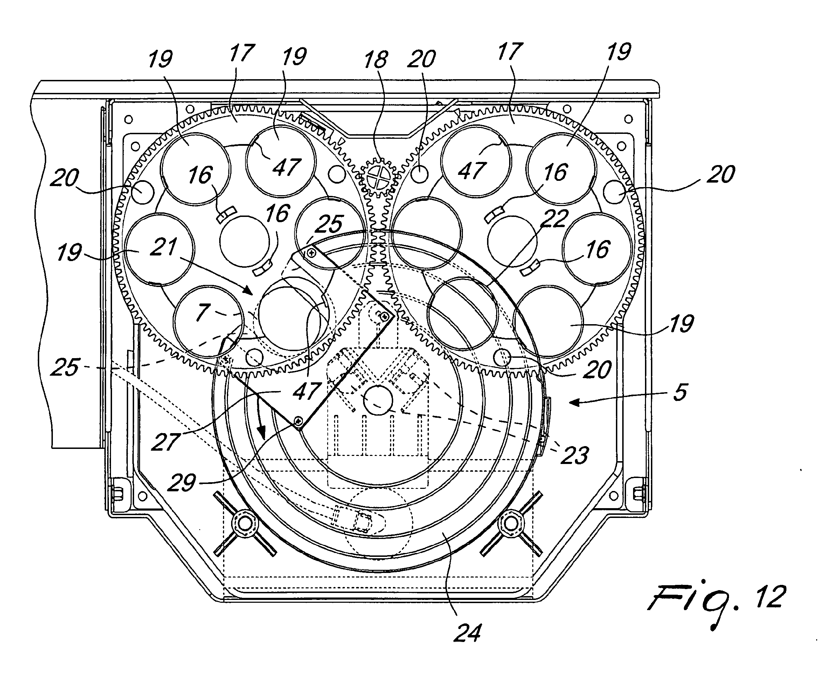

Figure 12 is a view, similar to the preceding one, of a subsequent step of counter-rotation of the feeder to acquire the cartridge;
Figure 13 is a view, similar to the preceding one, of the feeder in the position in which the cartridge is in the injection step;

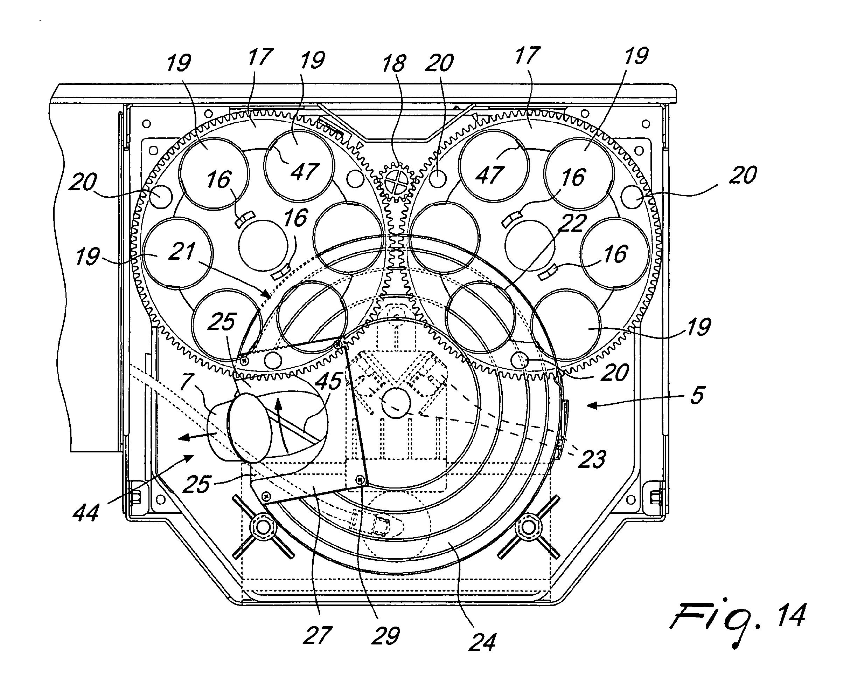

Figure 14 is a view, similar to the preceding one, of the feeder in the position for expelling the cartridge.

With reference to the cited figures, an apparatus according to the invention, generally designated by the reference numeral 1, comprises two magazines 2 and 3, which are detachably associated with a frame 4 which supports a feeder 5 and an injector 6.

The magazines 2 and 3 are suitable to contain a plurality of cartridges 7, which contain coffee powder or any other substance suitable for preparing an infusion beverage.

Each magazine 2, 3 is constituted by a plurality of cylinders 8, preferably made of transparent plastics, which are suitable to contain a stack of cartridges 7 and are closed in an upper region by a lid 9 and in a lower region by a perforated base 10.

The base 10 has holes 11, which correspond to the cylinders 8, so that the cartridges contained therein can descend and exit from the holes to be picked up by the feeder 5, in the manner described hereinafter.

Each magazine 2, 3 has a cartridge retention means which retains the cartridges inside the magazine when the magazine is not inserted in the apparatus.

The magazine is in fact supplied filled with cartridges and is inserted in the apparatus in replacement of a depleted magazine.

The cartridge retention means comprises a pair of coaxial contoured plates 12 and 13 provided with tabs 14 adapted to interfere with the holes 11 of the base 10 of the magazine.

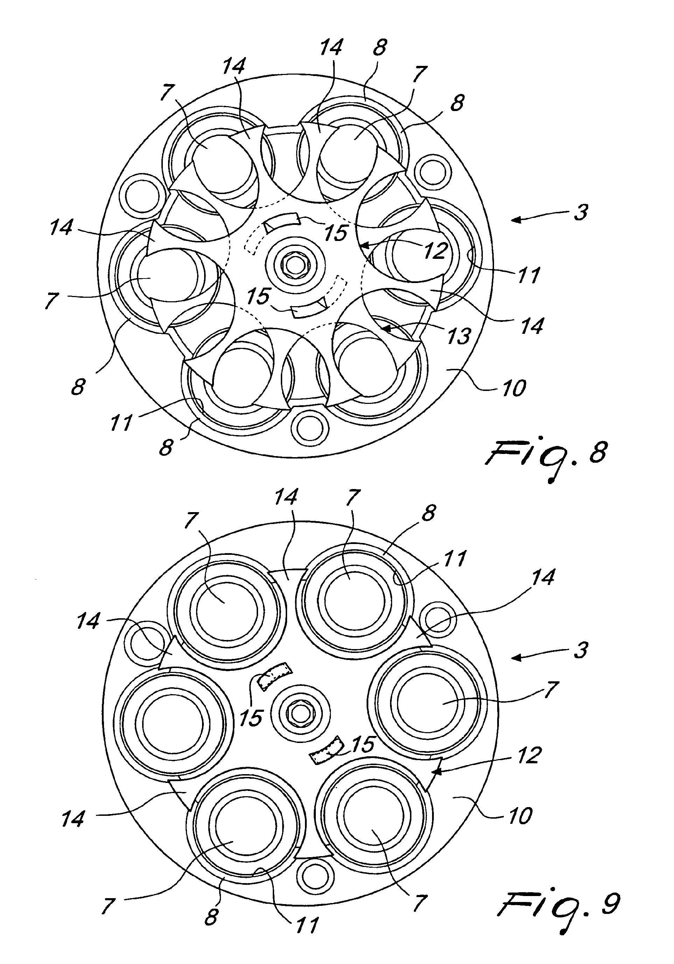

The contoured plates 12 and 13 can rotate in mutually opposite directions in order to define at least two positions: a retention position, shown in Figure 8, in which the tabs 14 interfere with the holes 11, preventing the cartridges 7 from exiting, and an open position, shown in Figure 9, in which the tabs 14 clear the holes 11, allowing the cartridges 7 to descend.

The contoured plates are kept in the retention position by elastic members, which are not shown in the figures.

The contoured plates open automatically upon insertion of the magazine 2, 3 in the apparatus by means of contoured notches 15, which are provided within the plates and are entered by teeth 16 provided on respective rotating supports 17 of the magazines. The rotating supports 17 are constituted by gears which are actuated by a pinion 18. The respective magazines 2 and 3 are applied to such rotating supports 17.

Each rotating support 17 comprises passage holes 19, which correspond to the cylinders 8 of the magazine 2 or 3, and pins 20, which are arranged asymmetrically on the support so as to engage respective holes of the base 10 of the magazine so that the magazine can be applied to the support only in one preset position.

Each passage hole 19 comprises a guiding tooth 47 which facilitates the fall of the cartridge into the feeder as described hereinafter.

Each rotating support 17 is adapted to receive a stack of cartridges 7 contained in a cylinder 8 in a respective removal position, designated by the reference numerals 21 and 22, in which a cartridge is removed from the feeder.

There are two removal positions, one for each magazine, arranged asymmetrically with respect to the feeder.

Removal and feeding of a cartridge occurs first in a removal position 21, until the cartridges in the respective magazine 2 are depleted, and then in the second removal position 22, in order to remove cartridges from the second magazine 3.

The magazines 2 and 3 provide in succession the various stacks of cartridges contained in the cylinders 8 by the rotation of the pinion 18, which actuates the rotation of the rotating support 17 through a preset angle.

The rotation of the pinion and therefore of the rotating support 17 is actuated by the electronic control circuit of the apparatus, which receives a depleted stack signal from optical sensors 23 which read the presence or absence of the cartridges in the respective cylinders 8 at the respective removal positions.

The feeder 5 comprises a rotating disk 24, which is provided with a radial opening provided with a means for temporary engagement of a cartridge 7.

The temporary engagement means is constituted by a fork having elastic arms 25 which retain the capsule or cartridge below its upper edge 26.

The elastic arms 25 are rod-like members hinged to a frame 27 with the interposition of springs 28.

The frame 27 is associated with the rotating disk 24 by means of screws 29.

The frame 27 is interchangeable in order to use the apparatus with cartridges or pods of different dimensions and shapes.

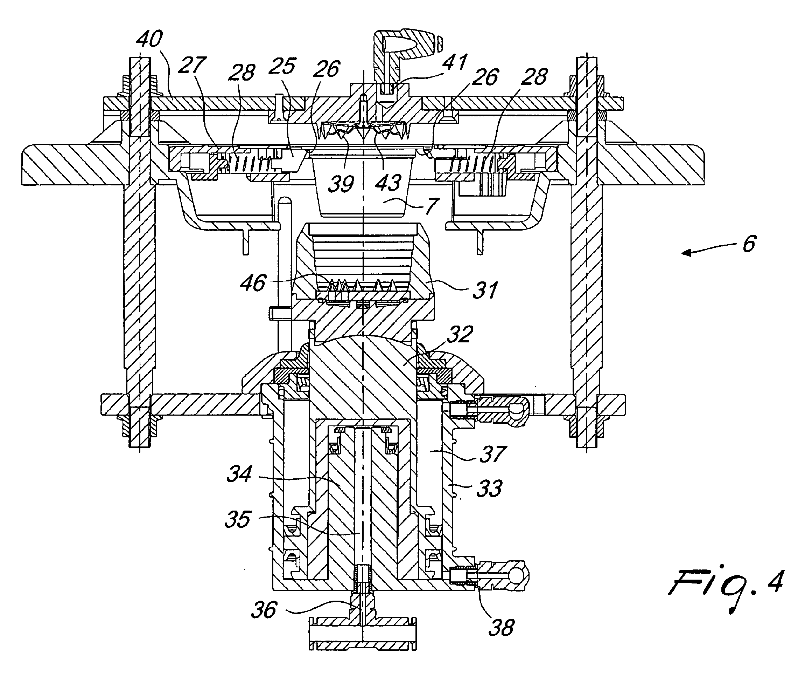

In the normal position, the elastic arms 25 are pushed by the respective springs 28 towards the center of the radial opening and in this manner the upper edge 26 of the cartridge 7 rests against the arms, as shown in Figure 4.

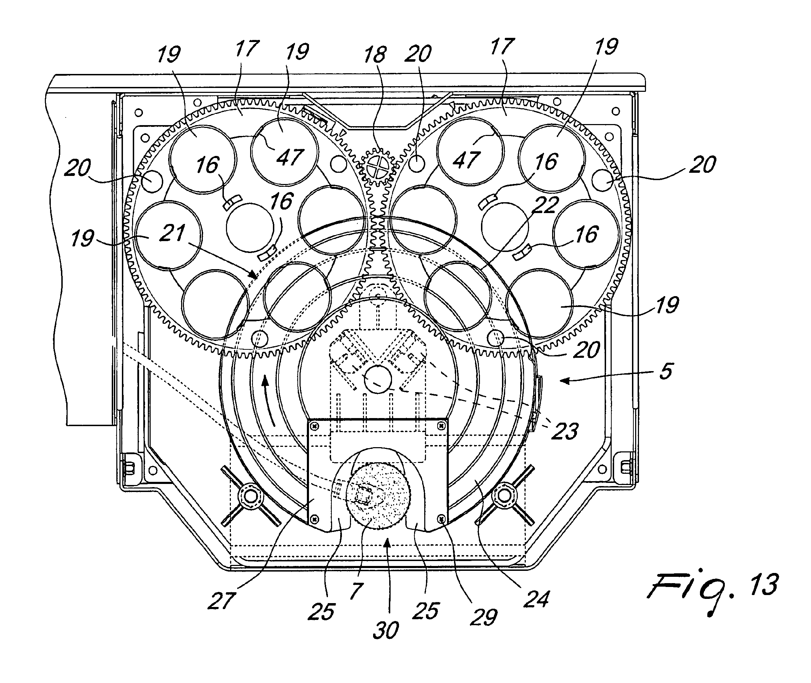

The rotating disk 24 moves the cartridge 7 from the removal position 21 to the injection position 30, shown in Figure 13, which corresponds to the position of the injector 6.

The injector 6 comprises a cartridge holder 31 which is actuated by a double hydraulic piston constituted by a power piston 32 inserted within a cylinder 33.

The power piston 32 is hollow and receives internally a stem 34. The stem 34 is provided with an axial passage 35 which is supplied by a pressurized fluid which arrives from a first duct 36.

The power piston 32 forms an annular cavity 37 together with the cylinder 33. The annular cavity 37 is fed with pressurized fluid by means of a second duct 38.

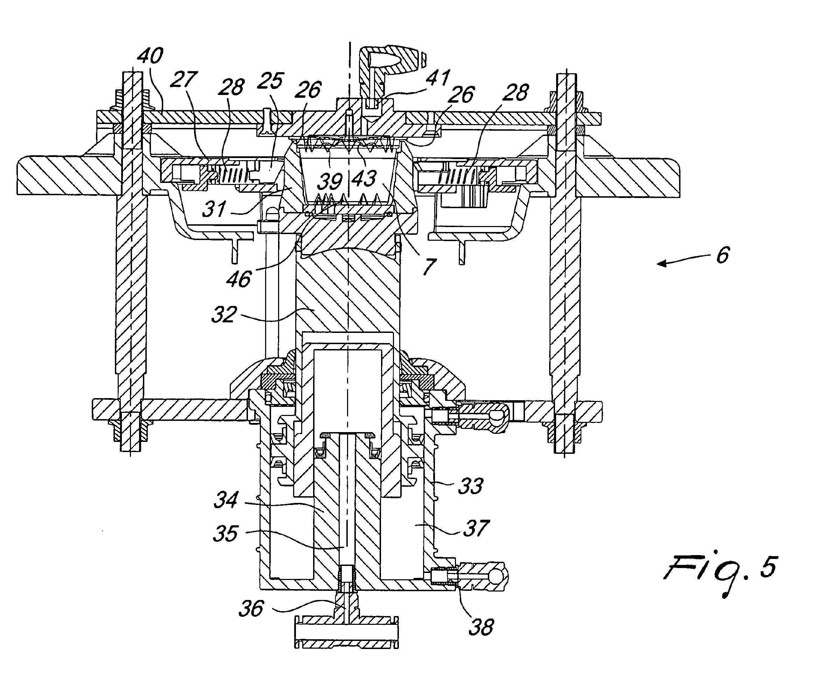

The pressurized fluid fed by the first duct 36 produces an upward movement of the cartridge holder 31, which takes the cartridge 7 and moves it to the injection position, shown in Figure 5, in which it abuts against a piercing means 39 associated with a head 40 constituted by a metallic plate which is associated with the frame.

In that position, fluid is fed from the second duct so as to lock the cartridge against the head 40 with greater force.

The double hydraulic piston allows a first quick movement of the cartridge from the lower position to the injection position and a subsequent firmer locking during the injection step.

The piercing means is constituted by a plurality of triangular teeth 39, which are circumferentially arranged in the lower surface of the head 40 so as to pierce the upper membrane of the cartridge 7 which is forced by the cartridge holder 31 against the head.

The head 40 comprises an injector 41 which receives hot water from a heater 42, for performing the infusion.

An elastic member 43 is provided at the triangular teeth 39. The elastic member is constituted by a blade 43 which moves the cartridge 7 away from the head 40 when the cartridge holder 31 descends, in order to prevent the cartridge from jamming in the triangular teeth and returning to the transport position between the arms 25 of the fork.

Once infusion has ended, the rotating disk 24 turns clockwise in order to move the cartridge to an expulsion position, designated by the reference numeral 44, in which an inclined plane 45, provided below the rotating disk, lifts the cartridge 7, which disengages from the fork and falls laterally in order to end in a collection container, not shown in the figures.

Depending on the type of cartridge 7 used, the dimensions and shape of the arms 25 of the fork of the temporary engagement means and dimensions and shape of the cartridge holder 31 may vary.

Also, for some types of cartridge, lower piercing members 46 are arranged inside the cartridge holder 31 in order to pierce the base of the cartridge at the time of infusion.

The operation of the apparatus according to the present invention is as follows.

When inactive, the apparatus has a stack of cartridges 7 contained in a cylinder 8 of the magazine 2 at the removal position 21 in which the first cartridge of the stack, i.e., the lowest one, rests on the plane of the rotating disk 24.

When the apparatus receives the dispensing command, the rotating disk 24 is turned until the fork 25 lies below the removal position 21, so that the cartridge 7 falls into the fork.

In its fall, the cartridge is guided by the guiding tooth 47, which acts as a temporary support for the cartridge so that it is arranged in a slightly oblique position partially in the passage hole 19 and in the fork 25.

At this point, the rotating disk 24 performs a small rotation in the opposite direction, i.e., counterclockwise, thus causing the cartridge 7 to fall in a perfectly horizontal position onto the fork 25.

The rotating disk 24 then resumes the clockwise rotation and moves the cartridge 7 into the injection position 30.

In the injection position, the cartridge 7 is taken by the cartridge holder 31, by the action of the double hydraulic piston, and is locked against the head 40, while the cartridge is pierced simultaneously by the piercing teeth 39.

As better seen in Figure 5, in the injection position the elastic arms 25 are moved mutually apart by the cartridge holder by the elastic deformation of the springs 28.

With the cartridge 7 firmly coupled to the head 40, hot water is fed through the injector 41. The hot water passes through the cartridge, and the beverage thus formed is sent to a dispensing duct in order to be poured into a container, such as a glass or cup in an appropriate receptacle of the machine, which is not visible in the figures.

Once infusion has ended, the double hydraulic piston retracts the cartridge holder, and the cartridge, assisted by the blade 43, returns into the fork 25.

A new clockwise rotation of the rotating disk 24 moves the cartridge 7 at the expulsion position 44 in which the inclined plane 45 lifts the cartridge 7, which disengages from the fork and falls laterally in order to end in a collection container, which is not visible in the figures.

The apparatus stops in this position until a new dispensing command.

When the stack of cartridges in the cylinder 8 is depleted, the lack of cartridges is detected by the respective optical sensor 23, which sends a signal to the control system of the machine.

The control system actuates a rotation of the pinion 18, which turns the rotating support 17 in order to move a new cylinder 8 at the removal position 21.

When all the cylinders 8 of the first magazine 2 are empty, the rotation of the rotating support 17 of the second cartridge 3 is actuated so that a cylinder 8 of this second magazine is positioned at the second removal position 22, so that cartridge feeding continues from the second magazine.

When the magazines are empty, they are replaced with new magazines already filled with cartridges.

During the handling of the full magazines, the retention means constituted by the pair of contoured plates 12 and 13 prevents the cartridges from exiting the cylinders 8.

When the magazines are arranged on the respective rotating supports, the retention means is opened automatically as described above.

Also, the feeder system allows to load cartridges of different types, i.e., to provide the user with different types of beverages, since at each request the magazines can be rotated in order to bring into the removal position the stack of cartridges with the chosen type of beverage.

The apparatus according to the present invention is particularly useful for preparing and dispensing espresso coffee.

The cartridges or pods 7 can in any case contain any other powder for producing other types of beverage with water under pressure.

The apparatus according to the present invention, by virtue of its compactness, can be inserted in a machine for dispensing hot soluble beverages in general.

In practice it has been found that the invention achieves the intended aim and objects, an apparatus having been provided which is capable of dispensing automatically, rapidly and efficiently a beverage prepared by means of prepackaged cartridges or pods.

A particular advantage of the present invention is constituted by the fact that the apparatus allows to dispense up to 12 pods of different products, one type for each cylinder of the two magazines.

An important advantage of the present invention resides in the very high reliability of its operation.

The present invention also brilliantly solves the problem of using cartridges of different types, in terms of both shape and dimensions: it is in fact sufficient to replace the cartridge holder and the fork.

## Claims

1. An apparatus for preparing and dispensing beverages from a powder contained in capsules, comprising at least one magazine (2, 3) which is adapted to contain at least one stack of capsules (7) which contain a powder suitable to produce a beverage, a feeder (5) adapted to remove a capsule from said magazine and move it to an injection position; an injector (6) which injects water into said capsule (7) to produce a beverage, said feeder (5) being adapted to move said capsule (7) to a discharge position, said feeder (5) comprising a rotating disk (24) provided with a contact portion and with at least one means for temporary engagement of a capsule; **characterized in that** said magazine is constituted by a plurality of cylinders (8), said cylinders (8) contain a stack of capsules (7) and are closed in a lower region by a base (10); said base (10) comprises a plurality of holes (11) which correspond to said cylinders (8), so that the capsules (7) contained therein can descend and exit from said holes (11) to be taken by said feeder (5); said magazine (2, 3) comprises a capsule retention means which retains said capsules inside said magazine when said magazine is not applied to said apparatus; said capsule retention means comprising a pair of coaxial contoured plates (12, 13) which are provided with tabs (14) adapted to interfere with said holes (11) of said base (10); said contoured plates (12, 13) being able to turn in an opposite direction with respect to each other in order to define at least two positions: a retention position, in which said tabs (14) interfere with the holes (11) of said base (10), preventing said capsules (7) from exiting, and an open position, in which said tabs (14) clear the holes (11), allowing said capsules (7) to descend; said contoured plates comprising elastic members that keep said plates in the retention position, and contoured notches (15) engaged by teeth (16) provided on respective rotating supports (17), upon insertion of said magazine in the apparatus, in order to automatically open said contoured plates (12, 13); said rotating supports (17) are constituted by gears actuated by a pinion (18); each of said rotating supports (17) supporting a respective magazine (2, 3); each rotating support (17) comprises passage holes (19), which correspond to the cylinders (8) of the magazine (2, 3), and pins (20), which are arranged asymmetrically on said support (17) so as to engage respective holes (11) of said base (10) of the magazine so that said magazine can be applied to the support only in one preset position; each passage hole (19) comprising a guiding tooth (47) which facilitates the fall of a capsule (7) into said feeder (5); said magazines (2, 3) having the various stacks of capsules (7) contained in said cylinders (8) in succession by means of the rotation of said pinion (18) which actuates the rotation of said rotating support (17) through a preset angle; the rotation of said pinion (18), and therefore of said rotating support (17), being actuated by a control system of the apparatus, which receives a depleted stack signal from optical sensors (23) which detect the presence or absence of said capsules (7) in the respective cylinders (8) at the respective removal positions.

2. The apparatus according to claim 1, **characterized in that** it comprises two magazines (2, 3) detachably associated with a frame (4) which supports said feeder (5) and said injector (6).

3. The apparatus according to claims, **characterized in that** said rotating disk (24) of said feeder (5) comprises a radial opening provided with a means for temporary engagement of a capsule (7); said temporary engagement means is constituted by a fork which comprises elastic arms (25) which retain the capsule (7) below an upper edge (26) of said capsule (7); said elastic arms (25) being rod-like members which are pivoted to a frame (27) with the interposition of springs (28), said frame (27) being associated with said rotating disk (24); said frame is interchangeable in order to use the apparatus with capsules (7) having different dimensions and shapes; in a normal position, said elastic arms (25) are pushed by the respective springs (28) toward the center of said radial opening and in this manner the upper edge (26) of the capsule (7) rests on them.

## Patentansprüche

1. . Vorrichtung zur Zubereitung und Ausgabe von Getränken aus einem in Kapseln enthaltenen Pulver, umfassend zumindest ein Magazin (2, 3), das für die Aufnahme wenigstens eines Stapels von Kapseln (7) ausgebildet ist, die ein für die Zubereitung eines Getränks geeignetes Pulver enthalten, einen Transporteur (5), der für die Entnahme einer Kapsel aus dem Magazin und für deren Bewegung in eine Injektionsposition ausgebildet ist; einen Injektor (6), der zur Zubereitung eines Getränks Wasser in die Kapsel (7) injiziert, wobei der Transporteur (5) geeignet ist für die Bewegung der Kapsel (7) in eine Auswurfposition und wobei der Transporteur (5) eine Drehscheibe (24) aufweist, die mit einem Kontaktbereich und mit wenigstens einem Mittel für den zeitweiligen Eingriff mit der Kapsel versehen ist, **dadurch gekennzeichnet, dass** das Magazin durch eine Mehrzahl von Zylindern (8) gebildet ist, die einen Stapel von Kapseln (7) enthalten und die in einem unteren Bereich durch eine Basis (10) verschlossen sind; wobei die Basis (10) eine Mehrzahl von Öffnungen (11) hat, die mit den Zylindern (8) korrespondieren, so dass die darin enthaltenen Kapseln (7) nach unten fallen und aus den Öffnungen (11) treten können, um von dem Transporteur (5) aufgenommen zu werden; wobei das Magazin (2, 3) eine Kapselrückhalteeinrichtung hat, die die Kapseln in dem Magazin zurückhält, wenn das Magazin nicht in der Vorrichtung verwendet wird; wobei die Kapselrückhalteeinrichtung ein Paar von koaxialen konturierten Platten (12, 13) aufweist, die mit Nasen (14) versehen sind, die in die Öffnungen (11) der Basis (10) eingreifen; wobei sich die konturierten Platten (12, 13) relativ zueinander in eine entgegengesetzte Richtung drehen können, um mindestens zwei Positionen zu definieren: eine
Rückhalteposition, in der die Nasen (14) in die Öffnungen (11) der Basis (10) eingreifen und einen Austritt der Kapseln (7) verhindern, und eine offene Position, in der die Nasen (14) die Öffnungen (11) freigeben, wodurch die Kapseln (7) nach unten fallen können; wobei die konturierten Platten elastische Elemente umfassen, die die Platten in der Rückhalteposition halten, und konturierte Kerben (15), in die nach dem Einsetzen des Magazins in die Vorrichtung Zähne (16) eingreifen, die an jeweiligen sich drehenden Haltern (17) vorgesehen sind, um die konturierten Platten (12, 13) automatisch zu öffnen; wobei die sich drehenden Halter (17) durch Zahnräder gebildet werden, die durch ein Ritzel (18) betätigt werden; wobei jeder der sich drehenden Halter (17) ein jeweiliges Magazin (2, 3) hält; wobei jeder sich drehende Halter (17) Durchlassöffnungen (19) hat, die mit den Zylindern (8) des Magazins (2, 3) korrespondieren, und Zapfen (20), die asymmetrisch an dem Halter (17) angeordnet sind, um in jeweilige Öffnungen (11) der Basis (10) einzugreifen, so dass das Magazin nur in einer voreingestellten Position in dem Halter verwendet werden kann; wobei jede Durchlassöffnung (19) einen Führungszahn (47) hat, der das Fallen der Kapsel (7) in den Transporteur (5) erleichtert; wobei die Magazine (2, 3) die verschiedenen Stapel von Kapseln (7), die in den Zylindern (8) enthalten sind, durch die Drehung des Ritzels (18), das die Drehung der sich drehenden Halterung (17) über einen vorgegebenen Winkel veranlasst, der Reihe nach erhalten; wobei die Drehung des Ritzels (18) und damit der sich drehenden Halterung (17) durch ein Steuersystem der Vorrichtung veranlasst wird, das von optischen Sensoren (23), die das Vorhandensein oder das Fehlen der Kapseln (7) in den jeweiligen Zylindern (8) an den jeweiligen Entnahmepositionen erfassen, ein auf einen aufgebrauchten Stapel hinweisendes Signal erhält.

2. . Vorrichtung nach Anspruch 1, **dadurch gekennzeichnet, dass** diese zwei Magazine (2, 3) umfasst, die abnehmbar mit einem Rahmen (4) verbunden sind, der den Transporteur (5) und den Injektor (6) hält.

3. . Vorrichtung nach den Ansprüchen, **dadurch gekennzeichnet, dass** die Drehscheibe (24) des Transporteurs (5) eine radiale Öffnung aufweist, die mit einem Mittel für den zeitweiligen Eingriff mit einer Kapsel (7) ausgebildet ist; wobei das Mittel für den zeitweiligen Eingriff durch eine Gabel gebildet wird, die elastische Arme (25) hat, die die Kapsel (7) unterhalb einer Oberkante der Kapsel (7) halten; wobei die elastischen Arme (25) stabähnliche Elemente sind, die unter Zwischenschaltung von Federn (28) zu einem Rahmen geschwenkt werden, wobei der Rahmen (27) mit der Drehscheibe (24) verbunden ist; wobei der Rahmen austauschbar ist, um die Vorrichtung mit Kapseln (7) unterschiedlicher Dimensionen und Formen zu verwenden; wobei die elastischen Arme (25) in einer normalen Position durch die jeweiligen Federn (25) in Richtung auf die Mitte der radialen Öffnung gedrückt werden und auf diese Weise die Oberkante (26) der Kapseln (7) auf ihnen aufliegt.

## Revendications

1. Appareil pour préparer et distribuer des boissons à partir d'une poudre contenue dans des capsules, comprenant au moins un magasin (2, 3) qui est adapté pour contenir au moins une pile de capsules (7) qui contiennent une poudre convenant pour produire une boisson, un dispositif d'alimentation (5) adapté pour retirer une capsule dudit magasin et le déplacer dans une position d'injection ; un injecteur (6) qui insère de l'eau dans ladite capsule (7) afin de produire une boisson, ledit dispositif d'alimentation (5) étant adapté pour déplacer ladite capsule (7) dans une position de décharge, ledit dispositif d'alimentation (5) comprenant un disque rotatif (24) muni d'une partie de contact et d'au moins un moyen pour un engagement temporaire d'une capsule ; **caractérisé en ce que** ledit magasin est constitué d'une pluralité de cylindres (8), lesdits cylindres (8) contiennent une pile de capsules (7) et sont fermées dans la région inférieure par une base (10) ; ladite base (10) comprend une pluralité d'orifices (11) qui correspondent auxdits cylindres (8), de sorte que les capsules (7) qui y sont contenues puissent descendre et sortir par lesdits orifices (11) pour être récupérés par ledit dispositif d'alimentation (5) ; ledit magasin (2, 3) comprend un moyen de rétention de capsules qui retient lesdites capsules à l'intérieur dudit magasin lorsque ledit magasin n'est pas appliqué audit appareil ; ledit moyen de retenue de capsules comprenant une paire de plaques coaxiales profilées (12, 13) qui sont munies de pattes (14) adaptées pour interférer avec lesdits orifices (11) de ladite base (10) ; lesdites plaques profilées (12, 13) pouvant tourner dans un sens opposé l'une par rapport à l'autre afin de définir au moins deux positions : une position de retenue, dans laquelle lesdites pattes (14) interfèrent avec les orifices (11) de ladite base (10), empêchant lesdites capsules (7) de sortir, et une position ouverte, dans laquelle lesdites pattes (14) dégagent les orifices (11), permettant auxdites capsules (7) de descendre ; lesdites plaques profilées comprenant des éléments élastiques qui maintiennent lesdites plaques dans la position de retenue et des encoches profilées (15) engagées par des dents (16) ménagées sur des supports rotatifs respectifs (17), lors de l'insertion dudit magasin dans l'appareil, afin d'ouvrir automatiquement lesdites plaques profilées (12, 13) ; lesdits supports rotatifs (17) sont constitués d'engrenages actionnés par un pignon (18) ; chacun desdits supports rotatifs (17) supportant un magasin respectif (2, 3) ; chaque support rotatif (17) comprend des orifices de passage (19), qui correspondent aux cylindres (8) du magasin (2, 3), et des broches (20), qui sont ménagées de manière asymétrique sur ledit support (17) afin de s'engager dans les orifices respectifs (11) de ladite base (10) du magasin de sorte que ledit magasin puisse être appliqué au support uniquement en position préétablie ; chaque orifice de passage (19) comprenant une dent de guidage (47) qui facilite la chute d'une capsule (7) à l'intérieur dudit magasin (5) ; lesdits magasins (2, 3) ayant les diverses piles de capsules (7) confinées dans lesdits cylindres (6) à la suite par rotation dudit pignon (18) qui commande la rotation dudit support de rotation (17) d'un angle préétabli ; la rotation dudit pignon (18) et, par suite, dudit support de rotation (17), étant actionnée par un système de commande de l'appareil, qui reçoit un signal de pile appauvrie de capteurs optiques (23) détectant la présence ou l'absence desdites capsules (7) dans les cylindres respectifs (8) dans les positions de retrait respectives.

2. Appareil selon la revendication 1, **caractérisé en ce qu'**il comprend deux magasins (2, 3) associés de manière amovible à un châssis (4) qui supporte ledit dispositif d'alimentation (5) et ledit injecteur (6).

3. Appareil selon les revendications précédentes, **caractérisé en ce que** ledit disque rotatif (24) dudit dispositif d'alimentation (5) comprend une ouverture radiale pourvue d'un moyen d'engagement temporaire d'une capsule (7); ledit moyen d'engagement temporaire est constitué d'une fourche qui comprend des bras élastiques (25) qui retiennent la capsule (7) en dessous d'un bord supérieur (26) de ladite capsule (7) ; lesdits bras élastiques (25) étant des éléments en forme de tiges qui sont soumis à un pivotement sur un châssis (27) avec l'interposition de ressorts (28), ledit châssis (27) étant associé audit disque rotatif (24) ; ledit châssis est interchangeable afin d'utiliser l'appareil avec des capsules (7) ayant des dimensions et des formes différentes ; dans une position normale, lesdits bras élastiques (25) sont poussés par les ressorts respectifs (28) vers le centre de ladite ouverture radiale et, de cette manière, le bord supérieur (26) de la capsule (7) repose sur ceux-ci.
